# EUROPEAN PATENT APPLICATION

(11) **EP 0 957 265 A2**
(43) Date of publication of application: **17.11.1999**
(21) Application number: 99108613.3
(22) Date of filing: 10.05.1999
(51) Int. Cl.: F03D 3/04

(54) **Vertical axis wind turbine**

(30) Priority: 11.05.1998 IT SS980005
(71) Applicant: Sanna, Luigi, 07100 Sassari (IT)
(72) Inventor: Sanna, Luigi, 07100 Sassari (IT)
(74) Representative: Modiano, Guido, Dr.-Ing.

(57) **Abstract**

A wind turbine, comprising a stator which has a plurality of vertical baffles which are mutually inclined and form a substantially cylindrical internal chamber for the rotation of a rotor provided with rotary support means and with a plurality of vertical vanes which are mutually inclined and distributed with a constant spacing, the outer edges of the vanes being adapted to skim the outer surface of the chamber.

## Description

The present invention relates to a wind turbine.

It is known that the utilization of wind power to produce clean electric energy, i.e. with no emissions of environmental pollutants, is currently based mainly on the use of propeller-like turbines which have a horizontal rotation axis and utilize lift, which is a physical phenomenon that occurs when a wind stream strikes a wing-shaped surface.

These turbines are not devoid from drawbacks, including the fact that they are extremely expensive, they are unable to adequately utilize rapidly varying winds, require the replacement of the more expensive components in order to vary the amount of electric power produced, and therefore in order to meet the requirements of different users, and are particularly noisy.

The aim of the present invention is to eliminate the above drawbacks of the known art, by providing a turbine which can produce electric power without causing environmental pollutant emissions, can use winds having rapidly variable directions and meet the requirements of different users with a low cost, and can be easily adapted to the dimensions of the space available.

Within the scope of this aim, a further object of the present invention is to achieve the above aim with a structure which is simple, relatively easy to provide in practice, safe in use, effective in operation and relatively low in cost.

This aim and this object are both achieved by the present wind turbine, characterized in that it comprises a stator which has a plurality of vertical baffles which are mutually inclined and define a substantially cylindrical internal chamber for the rotation of a rotor provided with rotary support means and with a plurality of vertical vanes which are mutually inclined and distributed with a constant spacing, the outer edges of the vanes being adapted to skim the outer surface of the chamber.

Further characteristics and advantages of the present invention will become apparent from the detailed description of a preferred but not exclusive embodiment of a wind turbine, illustrated only by way of non-limitative example in the accompanying drawings, wherein:
Figure 1 is a schematic plan view of the wind turbine according to the invention;
Figure 2 is a front view of the turbine of Figure 1;
Figure 3 is a schematic plan view of a first embodiment of the turbine according to the invention;
Figure 4 is a front view of the turbine of Figure 3;
Figure 5 is a schematic plan view of a second embodiment of the turbine according to the invention;
Figure 6 is a front view of the turbine of Figure 5;
Figure 7 is a schematic plan view of a third embodiment of the turbine according to the invention;
Figure 8 is a front view of the turbine of Figure 7;
Figure 9 is a side view of the turbine of Figure 7;
Figure 10 is a schematic plan view of a fourth embodiment of the turbine according to the invention;
Figure 11 is a front view of the turbine of Figure 10.

With reference to the above Figures, 1 generally designates a wind turbine according to the invention.

The turbine 1 is constituted by a stator 2 inside which there is a cylindrical chamber for the rotation of a rotor 3.

The rotor 3 is constituted by a hollow body with a vertical axis, along the peripheral part of which there are multiple mutually inclined vanes 4 which are distributed with a constant spacing and whose outer edges are adapted to skim the outer surface of the cylindrical chamber.

The vanes 4, actuated by the wind, cause the rotation of the rotor 3 and are constituted by vertical rectangular laminae which can have different curvatures with respect to the horizontal plane.

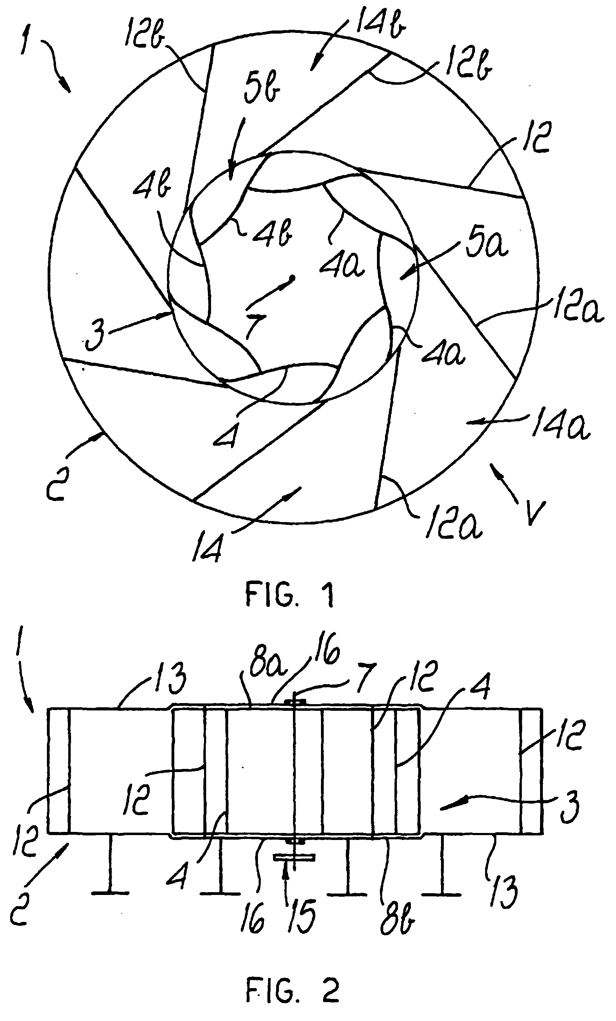

The vanes 4 shown in Figures 1, 7 and 10 are joined one another so that the inner edge of each vane rests on an intermediate portion of the adjacent vane, have a flattened S-shaped curvature and define blind pockets 5.

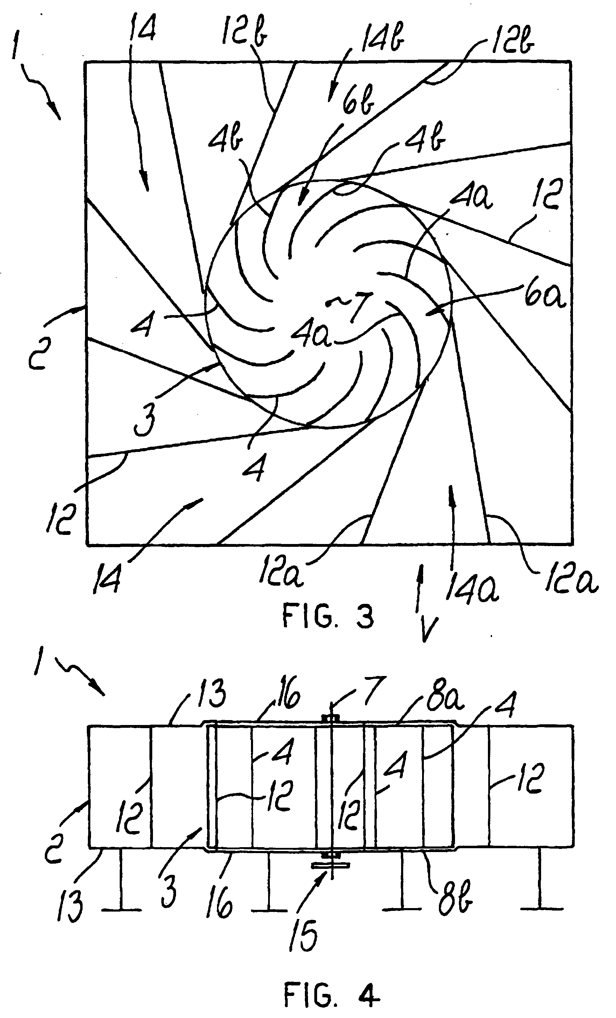

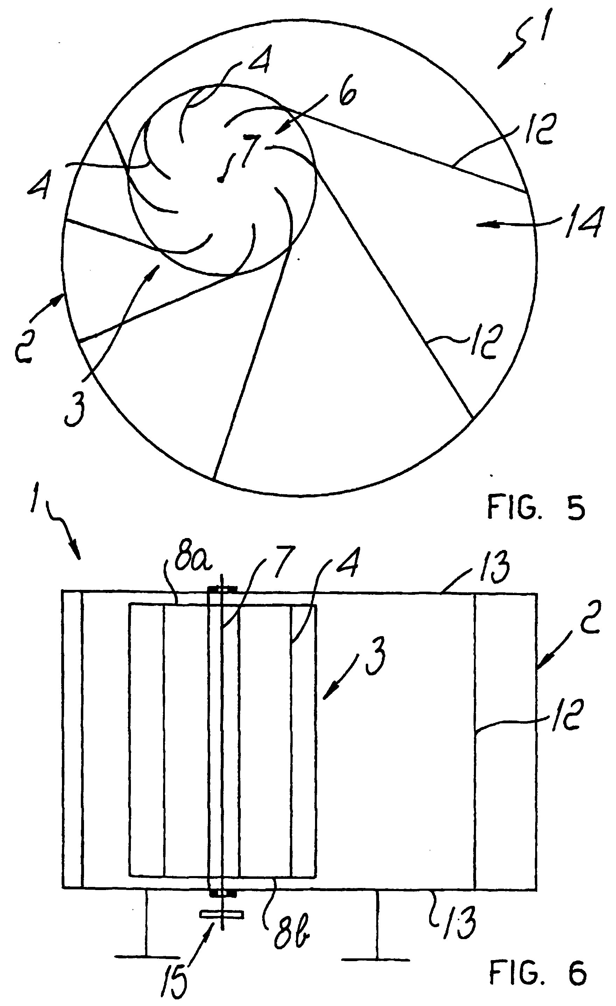

As an alternative, the vanes 4 of Figures 3 and 5 are not joined one another, they define channels 6 which open towards the inside of the rotor 3 and have a curvature of the circular-arc type.

The vanes 4 are connected to a vertical rotation axis 7 of the rotor 3, which has two disks, an upper one 8a and a lower one 8b, which constitute the flat ends of the hollow body: the spaces between the vanes are closed in an upward region and in a downward region by said disks.

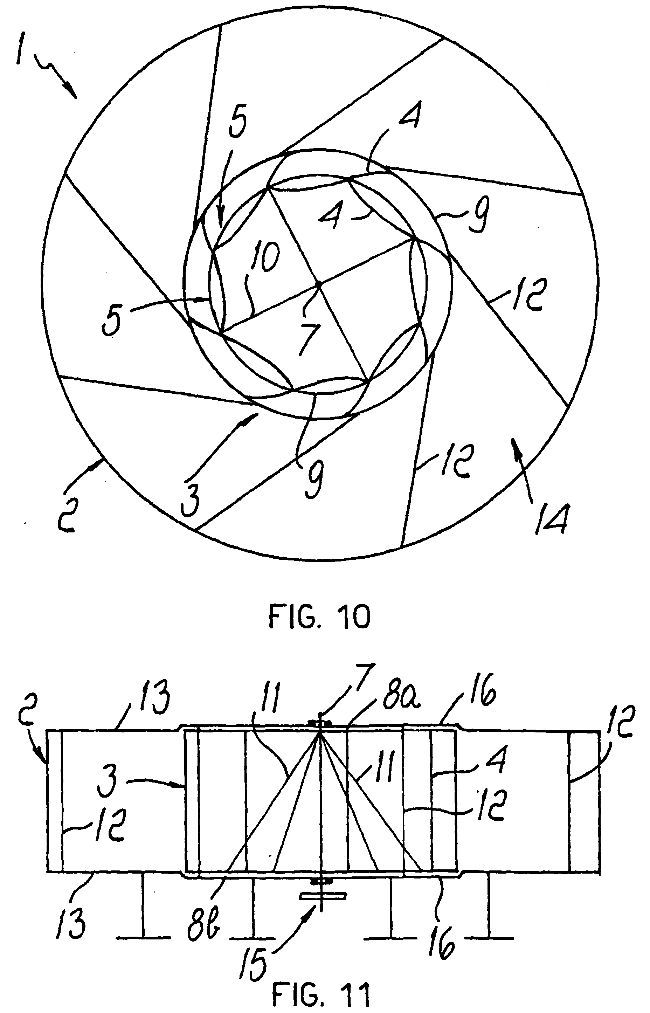

In the alternative embodiment of Figure 10, the vanes 4 can be fixed to the rotor 3 by means of flat rings 9 or the like which connect one another the ends of the vanes and to which horizontal members 10 and oblique members 11 are fixed; said members connect said rings to the vertical axis 7 of the rotor 3, and the spaces between the vanes, in an upward region and in a downward region, are open.

The stator 2 is the structure within which the rotation of the rotor 3 occurs; it constitutes a wind speed booster and defines a sort of enclosure constituted by a plurality of baffles 12 and by two horizontal plates, an upper one 13a and a lower one 13b.

The baffles 12 are vertical rectangular laminae which are mutually inclined, define the internal cylindrical chamber for the rotation of the rotor 3 and are fixed to the plates 13 in an upper region and in a lower region.

The baffles 12 form, in pairs, respective ducts 14 which converge toward the chamber and are adapted to increase the speed of the inflowing wind; they are arranged so as to be tangent to the rotor 3 or along a line that joins mutually equidistant points located along the circumference of said rotor.

Means 15 for the rotary support of the rotor 3 are provided at the center of the plates 13 and can consist, for example, of conventional ball bearings.

Conveniently, the upper and lower ends of the rotor 3 are mounted at respective seats 16 formed in the plates 13 of the stator 2, but other embodiments without said seats are possible (Figure 6).

The distance between the plates of the stator can be equal to the height of the vanes of the rotor or greater, with an inward inclination which converges towards the rotor vanes.

The fundamental parameters for defining the characteristics of the turbine according to the invention are the number of vanes, the number of baffles, the ratio between the height and the diameter of the rotor, and the ratio between the diameter of the enclosure and the diameter of the rotor.

The operation of the turbine does not vary if the shape of the perimeter of the stator varies; the perimeter can be circular, square, rectangular or otherwise polygonal.

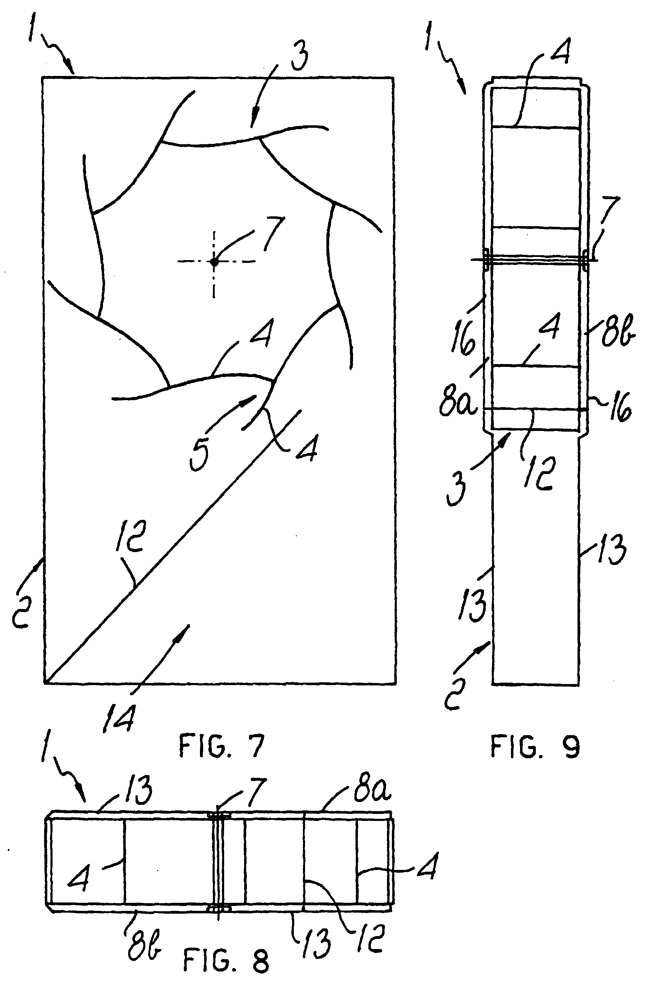

Depending on the position of the rotor 3 with respect to the stator 2, radial turbines (the stator has a centrally located rotor) (Figures 1, 3 and 10), asymmetrical turbines (the stator has an eccentrically located rotor) (Figure 5), and so-called polarized turbines (the stator has the rotor located at one end) (Figure 7) are obtained.

In the case of a radial turbine, operation does not vary as the direction of the wind changes and therefore there is no need to provide particular devices for adapting the turbine to the changes in wind direction.

Conveniently, for an equal diameter of the rotor and of the stator, asymmetrical turbines are most adapted for utilizing winds whose direction changes scarcely, while it is possible to use polarized turbines in order to utilize winds blowing in a fixed direction.

A possible application of the polarized turbine is as follows: fitted on the roof of electric vehicles, it could use the wind stream during slowing down; the electric power produced can be used to recharge the batteries.

At the larger flat end 17 of the duct 14 of the stator 2 it is possible to install an opening-closure system (for example of the shutter type), not shown, which remains open while the vehicle slows down and allows the operation of the turbine and the production of electric power to the detriment of the speed of the vehicle.

When the vehicle accelerates or travels at a constant speed, the opening/closure system is kept closed, so as to prevent the operation of the turbine and avoid any aerodynamic braking action caused by the active turbine.

The electric power generation of the wind turbine according to the invention occurs by connecting the vertical axis 7 of the rotor to a dynamo or to an alternator, both of which are not shown.

Advantageously, although being designed for streams of gaseous fluids (air) such as wind, the turbine can also use streams of liquid fluids (water), such as sea currents.

Since the rotor is a dynamic element, it is made of very light and strong materials which are accordingly expensive, while the stator, being a static element, can be manufactured with low-cost materials.

In order to even out the flow of the wind and avoid formation of excessive vortices, it is possible to use turbines in which the enclosures have intermediate plates and the rotors have intermediate bases; this is equivalent to providing stacked turbines.

It is further possible to join one another multiple turbines in order to obtain a set of multiple turbines: this occurs by means of a very large upper connecting plate and by means of connecting baffles which join one another two baffles of two different turbines and are larger than the baffles.

The connection baffles and the upper connecting plate constitute a sort of funnel into which the wind is forced in order to pass through the turbines.

The operation of the turbine according to the invention varies slightly according to the shape of the vanes of the rotor.

With joined vanes (Figure 1) it occurs as follows: the wind enters the turbine 1 through the external opening of the duct 14a delimited by the plates 13 and by the baffles 12a which are directed in the direction V from which the wind arrives; the wind accelerates as it approaches the rotor 3, exits from the duct 14a and enters the pocket 5a defined by the vanes 4a, concentrates on the bottom of said pocket, presses in a direction which is tangent to the rotor, causing its rotation, exits by being propelled by the centrifugal force of the pocket 5a, enters the duct 14b delimited by the plates 13 and by the baffles 12b that lie opposite to the intake baffles 12a, exits from the turbine through the external opening of the duct 14b, and merges with the surrounding wind flow.

In the case of a rotor with separate vanes (Figure 3), instead, after accelerating as it approaches the rotor 3, the wind exits from the dud 14a, enters the channel 6a defined by the vanes 4a, presses on the concave surface of the vane, causing the rotation of the rotor, exits from the channel 6a, enters the inner part of the rotor 3, enters the channels 6b defined by the opposite vanes 4b, exits from the external opening of the duct 14b and merges with the surrounding wind flow.

In practice it has been observed that the invention achieves the intended aim and object.

Since turbines with an identical rotor but with stators having different diameters produce different amounts of electric power, it is possible to use the same rotor to produce different amounts of energy, so as to meet the requirements of multiple users.

Accordingly, considerable manufacturing cost savings are achieved because the production of new stators allows the use of materials which are undoubtedly less expensive than the lighter and stronger ones required to produce the rotors.

The invention further allows to utilize both winds having a constant direction and winds whose direction varies rapidly, and easily adapts to the characteristics of the space available: for example, if the space available is the roof of a building, it is possible to provide a shallow but wide turbine, while if the space available has a limited surface which however allows vertical extension it is possible to manufacture a narrow but tall turbine.

The invention thus conceived is susceptible of numerous modifications and variations, all of which are within the scope of the inventive concept.

All the details may further be replaced with other technically equivalent ones.

In practice, the materials used, as well as the shapes and the dimensions, may be any according to requirements without thereby abandoning the scope of the protection of the appended claims.

The disclosures of Italian application no. SS98U000005 whose priority is claimed in the present application are included as reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A wind turbine, characterized in that it comprises a stator which has a plurality of vertical baffles which are mutually inclined and define a substantially cylindrical internal chamber for the rotation of a rotor provided with rotary support means and with a plurality of vertical vanes which are mutually inclined and distributed with a constant spacing, the outer edges of said vanes being adapted to skim the outer surface of the chamber.

2. The turbine according to claim 1, characterized in that said baffles are substantially rectangular laminae which define, in pairs, respective ducts which converge towards the chamber and are adapted to increase the speed of the inflowing wind.

3. The turbine according to one or more of the preceding claims, characterized in that said stator comprises an upper plate and a lower plate for supporting said baffles.

4. The turbine according to one or more of the preceding claims, characterized in that said rotor is constituted by a hollow body with a vertical axis along the peripheral part of which said vanes are distributed.

5. The turbine according to one or more of the preceding claims, characterized in that the vanes are constituted by substantially rectangular laminae which have, with respect to the horizontal plane, curvatures shaped like a flattened letter S or a circular arc or the like.

6. The turbine according to one or more of the preceding claims, characterized in that the vanes are joined one another, the inner edge of each vane resting on an intermediate portion of the adjacent vane, and are adapted to define, in pairs, respective blind pockets.

7. The turbine according to one or more of the preceding claims, characterized in that the adjacent vanes define, between them, channels which are open towards the inside of the rotor.

8. The turbine according to claim 4, characterized in that said vanes are fixed to the vertical axis by means of two disks, an upper one and a lower one, which constitute the bases of the hollow body and are adapted to close the spaces between the vanes in an upward region and in a downward region.

9. The turbine according to claim 4, characterized in that said vanes are fixed to the vertical axis by means of rings for connecting the ends of the vanes, horizontal and oblique members for connection to the vertical axis being fixed to said rings.

10. The turbine according to one or more of the preceding claims, characterized in that said baffles are arranged so as to be tangent to the rotor or along a line which joins mutually equidistant points arranged along the circumference of said rotor.

11. The turbine according to claim 1, characterized in that said chamber is central, the rotor being adapted to utilize winds having a variable direction.

12. The turbine according to claim 1, characterized in that said chamber is located eccentrically, the rotor being adapted to utilize winds whose direction varies scarcely.

13. The turbine according to claim 1, characterized in that said chamber is arranged at one end of the stator, the rotor being adapted to utilize winds whose direction is fixed.

14. The turbine according to one or more of the preceding claims, characterized in that the vertical axis of the rotor can be connected to a dynamo or to an alternator.

15. The turbine according to one or more of the preceding claims, characterized in that it is adapted to utilize flows of gaseous and/or liquid fluids.
